# EUROPÄISCHE PATENTSCHRIFT

(11) **EP 1 908 371 B1**
(45) Veröffentlichungstag und Bekanntmachung des Hinweises auf die Patenterteilung: **24.08.2016**
(21) Anmeldenummer: 07025063.4
(22) Anmeldetag: 02.04.2003
(51) Int. Cl.: A46D 3/04, A46B 9/04

(54) **Verfahren zur Herstellung einer Zahnbürste**
Method for producting a toothbrush
Procédé de fabrication d'une brosse à dents

(30) Priorität: 15.04.2002 DE 10216641
(43) Veröffentlichungstag der Anmeldung: 09.04.2008
(62) Teilanmeldung aus: 03707996.9
(73) Patentinhaber: Trisa Holding AG, 6234 Triengen (CH)
(72) Erfinder: Huber, Beat, 6233 Büron (CH); Fischer, Franz, 6234 Triengen (CH)
(74) Vertreter: Schaad, Balass, Menzl & Partner AG

(56) Entgegenhaltungen:
- EP-A- 0 870 440
- WO-A-00/40115
- DE-A1- 3 428 860
- DE-U1- 20 006 311
- GB-A- 2 250 428

## Beschreibung

Die Erfindung betrifft ein Verfahren zur Herstellung einer Zahnbürste gemäss dem Oberbegriff von Anspruch 1.

Zahnbürsten mit einem konventionellen Borstenfeld bestehend aus Bündeln von Borstenfilamenten, z.B. aus Polyamid (PA) oder Polyester (PBT), und zusätzlichen weichelastischen Reinigungselementen sind zum Beispiel aus der WO-A-00/64307 und der WO-A-01/21036 bekannt. Die konventionellen Borsten dienen dabei zur gewöhnlichen Reinigung der Zähne, während die weichelastischen Reinigungselemente unterschiedliche Funktionen erfüllen können, z.B. Massage des Gaumens, Dämpfung der Pützbewegung, Entfernung von Zahnbelägen oder Polieren der Zahnoberfläche. Gemäss der WO-A-00/64307 sind die weichelastischen Reinigungselemente stabförmig, haben etwa dieselbe Länge wie die konventionellen Borstenbündel und sind peripher am Kopfteil der Zahnbürste angeordnet. Bei den in der WO-A-01/21036 offenbarten Ausführungsformen sind die elastischen Reinigungselemente flächig, z.B. wellenförmig gestaltet, und innerhalb des konventionellen Borstenfelds angeordnet. Gemäss der WO-A-00/64307 sind mehrere der weichelastischen Reinigungselemente über eine Materialbrücke aus demselben Material miteinander verbunden. Die US-A-5,628,082 beschreibt ein Verfahren zur Herstellung einer Zahnbürste mit konventionellen Borsten und zusätzlichen weichelastischen Reinigungselementen.

Gemäss dem in der US-A-5,628,082 beschriebenen Herstellungsverfahren werden die Reinigungselemente nach dem Beborsten des Kopfteils der Zahnbürste mit konventionellen Borsten durch Umspritzen des Kopfteils hergestellt. Nachteilig hieran ist, dass die Borstenfilamente vor der Herstellung der weichelastischen Struktur gebrauchsfertig gemacht werden müssen, z.B. durch Abrunden der Borstenbündel oder Herstellen einer vorbestimmten Profilierung. Anschliessend ist ein erneutes Einsetzen in das Spritzgiesswerkzeug zur Herstellung des weichelastischen Reinigungselementes notwendig. Bei dieser Nachbearbeitung können die Borstenbündel beschädigt oder verschmutzt werden.

Der Erfindung liegt daher die Aufgabe zugrunde, ein Verfahren zur Herstellung einer Zahnbürste mit konventionellen Borsten, einem Trägerelement und optional mindestens einem weichelastischen Reinigungselement zur Verfügung zu stellen, mittels welchem die Haftung zwischen Trägerelement und Bürstenkörper überprüft wird.

Die Aufgabe wird gelöst durch ein Verfahren mit den Merkmalen von Anspruch 1.

Der Begriff Zahnbürste umfasst sowohl konventionelle Handzahnbürsten als auch elektrische Zahnreinigungsgeräte. Bei letzteren kann es sich um Aufsteckteile für elektrische Zahnreinigungsgeräte oder um einstückige Elektrozahnbürsten handeln. Vorteilhafte Weiterbildungen ergeben sich aus den abhängigen Ansprüchen, der Beschreibung und den Zeichnungen.

Bei einer Weiterbildung der Zahnbürste der eingangs genannten Art ist bevorzugt am Kopfteil wenigstens ein weichelastisches Reinigungselement unmittelbar mit dem Bürstenkörper verbunden. Die konventionellen Borsten sind auf einem Trägerelement aus hartem Kunststoff angebracht, welches separat hergestellt und mit konventionellen Borsten bestückt wird, bevor es mit dem Kopfteil des Bürstenkörpers unlösbar verbunden wird. Im verbundenen Zustand befindet sich das weichelastische Reinigungselement vorzugsweise in räumlicher Nähe zum Trägerelement mit den konventionellen Borsten. Um eine optimale Putzleistung zu erzielen und die Bürstenkopfdimensionen so klein wie möglich zu halten, ist der Abstand zwischen benachbarten konventionellen Borsten auf dem Trägerelement und den weichelastischen Reinigungselementen um Bürstenkörper vorzugsweise kleiner als 5 mm. Damit kommen beim Gebrauch sowohl die konventionellen Borsten als auch das weichelastische Reinigungselement zum Einsatz. Die Verbindung zwischen dem Trägerelement und dem Kopfteil des Bürstenkörpers wird über eine Aufnahme bewerkstelligt. Je nach Ausgestaltung des Trägerelementes kann die Aufnahme ein komplementäres Gegenstück zum Trägerelement oder zu einem daran angeordneten Ankopplungselement sein. Beispielsweise kann eine flächige Aussparung, ein Stift, ein Loch oder eine Nut als Aufnahme dienen. Eine Aussparung, welche der äusseren Form des Trägerelementes angepasst ist, bietet sich besonders für die unlösbare Verbindung zwischen Trägerelement und Bürstenkörper an. Die Reinigungselemente sind dabei am Kopfteil bevorzugt im Randbereich um die Aussparung angeordnet.

Gemäss dem erfindungsgemässen Herstellungsverfahren wird das Trägerelement separat vom übrigen Bürstenkörper, an welchem das wenigstens ein weichelastisches Reinigungselement angeordnet sein kann, hergestellt und beborstet. Bevorzugt werden die Borsten darauf geschnitten, abgerundet oder auf andere Weise gebrauchsfertig gemacht. Bezüglich der zu wählenden Beborstungsart liegen keine Einschränkungen vor, so dass sämtliche der bekannten Verfahren wie beispielsweise AFT (Anchor Free Tufting), wie zum Beispiel aus DE-U-200 06 311 bekannt, IMT (In Mould Tufting), wie zum Beispiel aus DE-A-38 20 372 bekannt, oder konventionelles Stopfen angewendet werden können.

Zeitlich und örtlich unabhängig von der Herstellung des Trägerelementes erfolgt die Herstellung des Bürstenkörpers mit optional mindestens einem weichelastischen Reinigungselement und wahlweise weiteren weichelastischen Elementen. Im Gegensatz zu den konventionellen Borsten kann das optionale wenigstens eine weichelastische Reinigungselement und wahlweise weitere weichelastische Elementen unmittelbar, also nicht über ein zusätzliches Trägerelement, mit dem Bürstenkörper verbunden werden. Die weiteren: weichelastischen Elemente können beispielsweise für die ergonomische Anpassung des Handgriffes an die Handfläche oder für die Ausgestaltung eines elastischen Bereiches zwischen Kopfteil und Halsteil eingesetzt werden. Die Herstellung des Bürstenkörpers mit einem oder mehreren weichelastischen Reinigungselementen und optional weiteren weichelastischen Elementen erfolgt bevorzugt im Zwei- oder Mehrkomponentenspritzgiessverfahren, wobei sich die verschiedenen weichelastischen Elemente in einem Schritt anspritzen und mit der Hartkomponente des Bürstenkörpers verbinden lassen. Dabei wird bevorzugt eine unlösbare Verbindung zwischen den Komponenten hergestellt. Die weichelastischen Reinigungselemente können auch über eigene Anspritzpunkte hergestellt werden, insbesondere dann, wenn die weichelastischen Reinigungselemente eine von den weiteren weichelastischen Elementen abweichende Farbe oder Shore A Härte aufweisen sollen.

Konventionelle Borsten bestehen beispielsweise aus Polyamid (PA) oder Polyester (PBT) und haben einen Durchmesser von 0.1 mm bis 0.25 mm. Sie sind beispielsweise in Bündeln mit 10 bis 100 einzelnen Filamenten zusammengefasst. Die weichelastischen Reinigungselemente, welche beispielsweise aus thermoplastischem Elastomer (TPE) bestehen, haben aus Stabilitätsgründen höhere Materialstärken. Die kleinste Dimension eines Querschnittes (beispielsweise auf 90% der Höhe des Reinigungselementes) durch ein solches Reinigungselement beträgt vorzugsweise zwischen 0.5 mm bis 3 mm.

Das Material für die weichelastischen Reinigungselemente und optional weitere weichelastische Elemente wird vorzugsweise über einen Materialverteilungskanal im Handgriff oder im Halsteil zugeführt. Das weichelastische Material wird dabei an jene Stellen zugeführt, an welchen die weichelastischen Reinigungselemente und gegebenenfalls weitere weichelastische Elemente vorgesehen sind. Diese werden in entsprechenden Kavitäten des Spritzwerkzeuges geformt. Das weichelastische Material kann beispielsweise in eine für die Aufnahme des Trägerelementes bestimmte Aufnahme eingespritzt von der Mündung des Materialverteilungskanals zu den Ansatzstellen für die weichelastischen Reinigungselemente geführt werden. Um ein einwandfreies Ausspritzen der Reinigungselemente zu ermöglichen, weist der Materialverteilungskanal auf dem Halsteil vorzugweise einen minimalen Querschnitt von mindestens 0.5 mm² auf. Das weichelastische Material wird durch das Trägerelement nach dessen Montage auf das Kopfteil des Bürstenkörpers verdeckt. Der Vorteil dieses Herstellungsverfahren liegt darin, dass die Rückseite des Kopfteiles keine unerwünschten Anspritzpunkte oder Verteilkanäle aufweist. Als Haltepunkte des Bürstenkörpers für den Transport zwischen verschiedenen, den einzelnen Komponenten entsprechenden Formnestern während dem Zwei- oder Mehrkomponentenspritzguss des Bürstenkörpers werden vorzugsweise Ausnehmungen eingesetzt, die sich in jenem Bereich befinden, auf welchem die Trägerplatte montiert werden soll. Dies kann sowohl bei linearem als auch bei rotativem Transport der Bürstenkörper innerhalb des Spritzgusswerkzeuges von Vorteil sein. Vorzugsweise werden diese Ausnehmungen in der Hartkomponente des Bürstenkörpers mit der zuletzt gespritzten Materialkomponente ausgefüllt.

In einem einfachen weiteren Schritt erfolgt die Verbindung des Trägerelements mit dem Kopfteil des Bürstenkörpers. Möglich ist zum Beispiel eine Verbindung direkt nach der Spritzgiessmaschine des Bürstenkörpers, wobei die Bürstenkörper nach dem Spritzgiessen in ihrer Ausrichtung gehalten, und die Trägerelemente mittels Förderern zugeführt und montiert werden. Die Verbindung kann auf mechanischem Wege unlösbar erfolgen. Beispielsweise kann die Verbindung durch Verklemmen, Verschnappen oder Nieten hergestellt werden. Des weiteren kann die Verbindung chemisch durch Kleben, thermisch durch Schweissen, insbesondere Ultraschallschweissen, oder sonstige Wärmezufuhr hergestellt werden. Herstellungstechnisch bevorzugt ist, dass das Trägerelement aus demselben Material wie die Hartkomponenten des Bürstenkörpers besteht, da in diesem Fall nur eine Hartkomponente zur Herstellung der Bürste bereitgehalten und nicht auf gegenseitige Materialverträglichkeit geachtet werden muss. Dies hat insbesondere beim Ultraschallschweissen Vorteile. Besonders bevorzugt wird das Trägerelement gemäss der AFT (Anchor Free Tufting) Technologie beborstet und fertig bearbeitet, bevor es mittels Ultraschallschweissens mit dem mit wenigstens einem weichelastischen Reinigungselementen versehenen Bürstenkörper verbunden wird.

Die für das Trägerelement und die Hartkomponenten des Bürstenkörpers verwendeten Materialien sind insbesondere Polypropylen, Styrol-Acryl-Nitril, Polyester, Polystyrol (PS), Acryl-Nitril-Butadienstyrol (ABS) oder Isoplast^{®}. Vorzugsweise bestehen die weichelastischen Elemente aus einem insbesondere thermoplastischen Elastomer, z.B. aus natürlichem oder synthetischem Gummi. Die Shore A Härte der weichen Komponente ist vorzugsweise geringer als 90 und liegt besonders bevorzugt unter 40. Je nach Art der Hartkomponente ist vorzugsweise ein dazu kompatibles, sich während dem Spritzgussprozess verbindendes weichelastisches Material zu wählen.

Aufgrund der angestrebten unlösbaren Verbindung zwischen Trägerelement und Bürstenkörper wird die Zahnbürste nach dem Anbringen des Trägerelementes einer bei der Montagevorrichtung installierten Prüfvorrichtung ausgesetzt. Dabei wird mittels eines Stiftes oder eines ähnlichen Elementes eine Druckkraft auf das Trägerelement ausgeübt. Ist die Verbindung zwischen dem Trägerelement und dem Bürstenkörper unzureichend, so wird sie in diesem Schritt getrennt. Der Bürstenkörper kann Bereiche aus weichelastischen Material enthalten, welche die darauf ausgeübte Druckkraft auf das Trägerelement übertragen.

Damit hat auch der Konsument nach längerem Gebrauch die Möglichkeit, die Haftung zwischen Trägerelement und Bürstenkörper zu überprüfen, beispielsweise mittels Druckes durch Finger oder durch ein einfaches Hilfswerkzeug wie etwa einen Kugelschreiber. Damit der Bereich aus weichelastischem Material bei der Durchführung der Prüfung nicht beschädigt wird, hat dessen dünnste Stelle vorzugsweise eine Dicke von mindestens 0.5 mm.

Die beschriebenen Prüfmethoden können auch an Zahnbürsten ohne weichelastische Elemente angewandt werden. Dies ist insbesondere bei mittels AFT hergestellten Zahnbürsten vorteilhaft, um die Verbindung zwischen Trägerelement und Bürstenkörper zu überprüfen.

Gemäss dem oben beschriebenen Herstellungsverfahren entfallen die Probleme, welche sich bei der Herstellung von Zahnbürsten mit konventionellen Borsten und weichelastischen Reinigungselementen beim Umspritzen des Kopfteils nach erfolgtem Beborsten ergeben. Befinden sich die weichelastische Reinigungselement bereits im Borstenfeld, während die konventionellen Borsten bearbeitet werden, so kann gemäss dem oben beschriebenen Herstellungsverfahren zudem verhindert werden, dass die weichelastischen Reinigungselemente beim Bearbeiten der Borsten verletzt oder durch Schleifstaub verschmutzt werden.

Ein weiterer Vorteil der separaten Herstellung von Bürstenkörper mit Reinigungselement und Trägerelement mit konventionellen Borsten liegt darin, dass Formen der weichelastischen Reinigungselemente in weitem Umfang realisiert werden können. Beispielsweise sind Formen realisierbar, die die konventionellen Borsten im endmontierten Zustand berühren oder die beim Einsetzen des Trägerelements verdrängt werden. Durch die separate Herstellung ist die Entformung der weichelastischen Struktur unproblematisch.

In einer vorteilhaften Weiterentwicklung kann bei elektrischen Zahnreinigungsgeräten mindestens ein weichelastisches Reinigungselement derart auf dem Bürstenkörper angeordnet werden, dass das weichelastische Reinigungselement durch die Bewegung des drehbeweglich gelagerten Trägerelementes relativ zum Bürstenkörper in Bewegung, insbesondere Vibration, versetzt wird. Dies lässt sich beispielsweise dadurch bewerkstelligen, dass das Trägerelement mindestens eine seitliche Einbuchtung aufweist und das Reinigungselement im Bereich der Einbuchtung positioniert wird. Das Reinigungselement wird somit durch die Bewegung des Trägerelementes relativ zum Bürstenkörper in Vibration versetzt. In einer weiteren Ausführungsart sind die Reinigungselemente derart gebogen gestaltet, dass sie mit ihrem an das freie Ende angrenzenden Bereich in das von den Borsten gebildete Borstenfeld hineinragen und auf diesem Wege bei Bewegung der Borsten relativ zum Bürstenkörper in Bewegung versetzt werden. Um eine optimale Vibrationswirkung zu erreichen und den Verschleiss der weichelastischen Reinigungselemente minimal zu halten, beträgt der Winkel relativ zur Drehachse des Trägerelements vorzugsweise weniger als 20°. Damit die in Bewegung versetzten weichelastischen Reinigungselemente an der Basis nicht übermässig abgenutzt werden, beträgt der maximale Drehwinkel des Trägerelementes gegenüber den weichelastischen Reinigungselementen bevorzugt weniger als 75°, besonders bevorzugt weniger als 45°.

Da elektrische Zahnreinigungsgeräte ein Gewicht von bis zu 300 g aufweisen und um ein mehrfaches schwerer sind als manuelle Zahnbürsten, wird die stirnseitige Zone aus weichelastischem Material, welche die Reinigungselemente speist, vorzugsweise mit einer Schichtdicke von über 1 mm versehen, um bei Schlägen eine dämpfende Wirkung zu entfalten und das Verletzungspotential zu vermindern.

Beispiele von Zahnbürsten sind in der Zeichnung dargestellt und nachfolgend beschrieben. Es zeigen rein schematisch:
- Fig. 1a: einen Teil eines Bürstenkörpers in der Seitenansicht, wobei der besseren Übersichtlichkeit halber die weichelastischen Reinigungselemente nicht dargestellt sind;
- Fig. 1b: ein beborstetes Trägerelement in der Seitenansicht, welches an den in Fig. 1a teilweise dargestellten Bürstenkörper angepasst ist;
- Fig. 1c: in Draufsicht einen vorderen Teil einer Zahnbürste, welche aus den in Fig. 1a und 1b abgebildeten Komponenten zusammengesetzt ist, wobei die weichelastischen Reinigungselemente hier dargestellt sind;
- Fig. 1d: in Seitenansicht den in Fig. 1c abgebildeten Teil der Zahnbürste, welche aus den in Fig. 1a und 1b abgebildeten Komponenten zusammengesetzt ist, wobei die weichelastischen Reinigungselemente hier dargestellt sind;
- Fig. 2a: in Seitenansicht einen vorderen Teil eines Bürstenkörpers einer Wechselkopfzahnbürste mit weichelastischen Reinigungselementen;
- Fig. 2b: in Seitenansicht einen mit konventionellen Borsten bestückten Wechselkopf für den in Fig. 2a teilweise dargestellten Bürstenkörper;
- Fig. 2c: in Draufsicht einen vorderen Teil einer Zahnbürste, welche aus den in Fig. 2a und 2b dargestellten Komponenten zusammengesetzt ist;
- Fig. 3a: in Seitenansicht ein beborstetes Trägerelement für ein Aufsteckteil eines elektrischen Zahnreinigungsgerätes;
- Fig. 3b: in Seitenansicht einen zum Zusammenbringen mit dem Trägerelement gemäss Fig. 3a bestimmten Bürstenkörper eines Aufsteckteiles für ein elektrisches Zahnreinigungsgerät, wobei stabförmige weichelastische Reinigungselemente im Bereich des freien Endes des Kopfteiles angeordnet sind;
- Fig. 3c: eine Seitenansicht eines Aufsteckteils, welches aus den in Fig. 3a und 3b dargestellten Komponenten zusammengesetzt ist;
- Fig. 3d: in Draufsicht das in Fig. 3c dargestellte Aufsteckteil, welches aus den in Fig. 3a und 3b dargestellten Komponenten zusammengesetzt ist;
- Fig. 4a: ein der Fig. 3a entsprechendes beborstetes Trägerelement in Seitenansicht;
- Fig. 4b: einen zum Zusammenbringen mit dem Trägerelement gemäss Fig. 4a bestimmten Bürstenkörper eines weiteren Aufsteckteiles für ein elektrisches Zahnreinigungsgerät in Seitenansicht, wobei lamellenartige weichelastische Reinigungselemente auf der dem Halsteil zugewandten Seite des Kopfteils angeordnet sind;
- Fig. 4c: eine Seitenansicht eines Aufsteckteils, welches aus den in Fig. 4a und 4b dargestellten Komponenten zusammengesetzt ist;
- Fig. 4d: in Draufsicht das in Fig. 4c dargestellte Aufsteckteil, welches aus den in Fig. 4a und 4b dargestellten Komponenten zusammengesetzt ist;
- Fig. 5a: in Seitenansicht ein beborstetes Trägerelement für ein weiteres Aufsteckteil eines elektrischen Zahnreinigungsgerätes mit Ausnehmungen für weichelastische Reinigungselemente;
- Fig. 5b: in Seitenansicht einen zum Zusammenbringen mit dem Trägerelement gemäss Fig. 5a bestimmten Bürstenkörper eines weiteren Aufsteckteiles für ein elektrisches Zahnreinigungsgerät, wobei stabförmige Reinigungselemente um einen Drehteller am Kopfteil des Bürstenkörpers angeordnet sind;
- Fig. 5c: ein aus den in Fig. 5a und 5b dargestellten Komponenten fertig zusammengesetztes, Aufsteckteil in der Seitenansicht, wobei die weichelastischen Reinigungselemente während des Gebrauchs durch Wechselwirkung mit dem Trägerelement in Vibration versetzt werden;
- Fig. 5d: das in Fig. 5c dargestellte, Aufsteckteil in Draufsicht;
- Fig. 6a: einen vorderen Teil einer weiteren Ausführungsform eines Aufsteckteiles in Draufsicht;
- Fig. 6b: den in Fig. 6a abgebildeten vorderen Teil des Aufsteckteiles in Seitenansicht;
- Fig. 6c: das separate, mit Borsten bestückte Trägerelement der in Fig. 6a,b dargestellten Ausführungsform in Seitenansicht;
- Fig. 6d: einen vorderen Teil des mit weichelastischen Reinigungselementen versehenen Bürstenkörpers der in Fig. 6a,b dargestellten Ausführungsform in Seitenansicht;
- Fig. 7a: eine Seitenansicht eines beborsteten Trägerelementes für ein weiteres Aufsteckteil eines elektrischen Zahnreinigungsgerätes;
- Fig. 7b: in Seitenansicht einen zum Zusammenbringen mit dem Trägerelement gemäss Fig. 7a bestimmten Bürstenkörper eines weiteren Aufsteckteiles für ein elektrisches Zahnreinigungsgerät, wobei weichelastische Reinigungselemente um einen Drehteller am Bürstenkörper angeordnet sind;
- Fig. 7c: das aus den in Fig. 7a und 7b dargestellten Komponenten fertig zusammengesetzte, Aufsteckteil in Seitenansicht, wobei die Reinigungselemente während des Gebrauchs durch Wechselwirkung mit den Borsten in Vibration versetzt werden;
- Fig. 7d: das in Fig. 7c dargestellte, Aufsteckteil in Draufsicht;
- Fig. 8a: in Seitenansicht ein weiteres beborstetes Trägerelement mit Einbuchtungen für weichelastische Reinigungselemente;
- Fig. 8b: in Draufsicht das in Fig. 8a gezeigte Trägerelement;
- Fig. 8c: einen vorderen Teil eines zum Zusammenbringen mit dem Trägerelement gemäss Fig. 8a,b bestimmten Bürstenkörpers in Seitenansicht;
- Fig. 8d: eine Seitenansicht des vorderen Teiles einer Zahnbürste, welche aus den in Fig. 8a und 8c abgebildeten Komponenten zusammengesetzt ist;
- Fig. 8e: den in Fig. 8c abgebildeten Teil des Bürstenkörpers in Draufsicht;
- Fig. 9a: eine Draufsicht auf einen Teil einer Zahnbürste mit seitlichen Fortsätzen am Trägerelement, wobei die weichelastischen Reinigungselemente der besseren Übersichtlichkeit halber nicht dargestellt sind;
- Fig. 9b: einen Schnitt durch die Längsmittelebene des in Fig. 9a dargestellten Teiles der Zahnbürste, welche erfindungsgemäss einer MontagePrüfvorrichtung ausgesetzt wird;
- Fig. 10a: einen Schnitt durch die Längsmittelebene eines Teiles einer Zahnbürste mit einer weichelastischen Zone im Bürstenkörper, wobei die weichelastischen Reinigungselemente der besseren Übersichtlichkeit halber nicht dargestellt sind;
- Fig. 10b: einen Schnitt durch die Längsmittelebene des in Fig. 10a abgebildeten Teiles einer Zahnbürste, welche einer weiteren Montage-Prüfvorrichtung ausgesetzt wird;
- Fig. 11a: einen Schnitt durch die Längsmittelebene eines Teiles einer Zahnbürste, welche derjenigen aus Fig. 10a entspricht, wobei die weichelastischen Reinigungselemente der besseren Übersichtlichkeit halber nicht gezeigt sind;
- Fig. 11b: einen Schnitt durch die Längsmittelebene des in Fig. 11a abgebildeten Teils einer Zahnbürste, welche einer dritten Montage-Prüfvorrichtung unterzogen wird;
- Fig. 12a: die Draufsicht auf einen Teil eines Bürstenkörpers, in welchem ein weichelastischer Bereich ausgebildet ist, wobei die weichelastischen Reinigungselemente der besseren Übersichtlichkeit halber nicht gezeigt sind, und
- Fig. 12b: einen Schnitt durch die Längsmittelebene eines Teiles einer Zahnbürste, welche den in Fig. 12a dargestellten Bürstenkörper enthält und welche erfindungsgemäss einer Montage-Prüfvorrichtung ausgesetzt wird.
- Fig. 13: einen Schnitt durch die Längsmittelebene eines Teiles einer Zahnbürste, welche einer weiteren Montage-Prüfvorrichtung ausgesetzt wird.

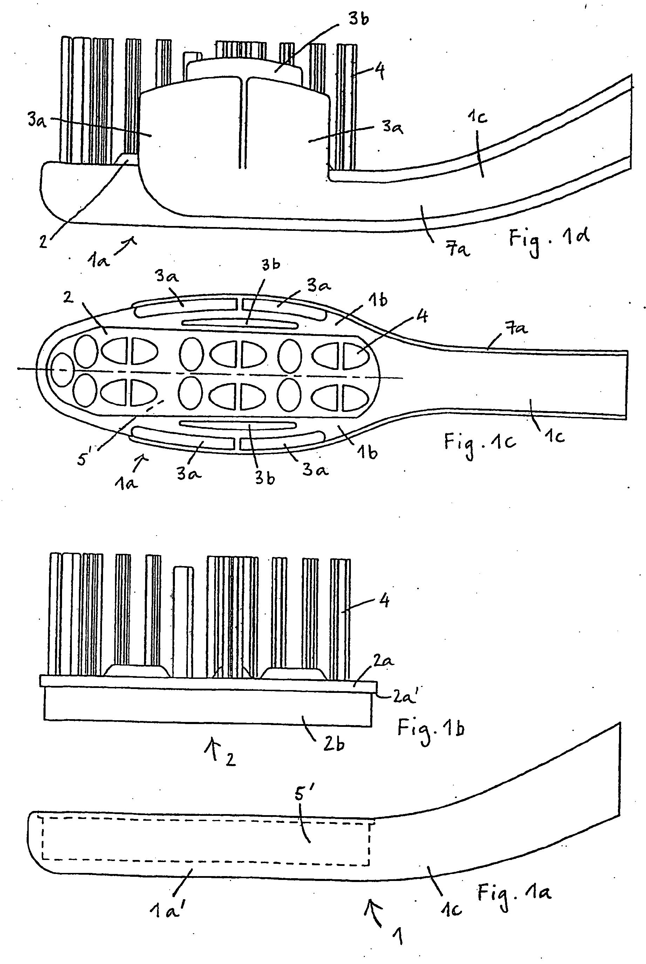

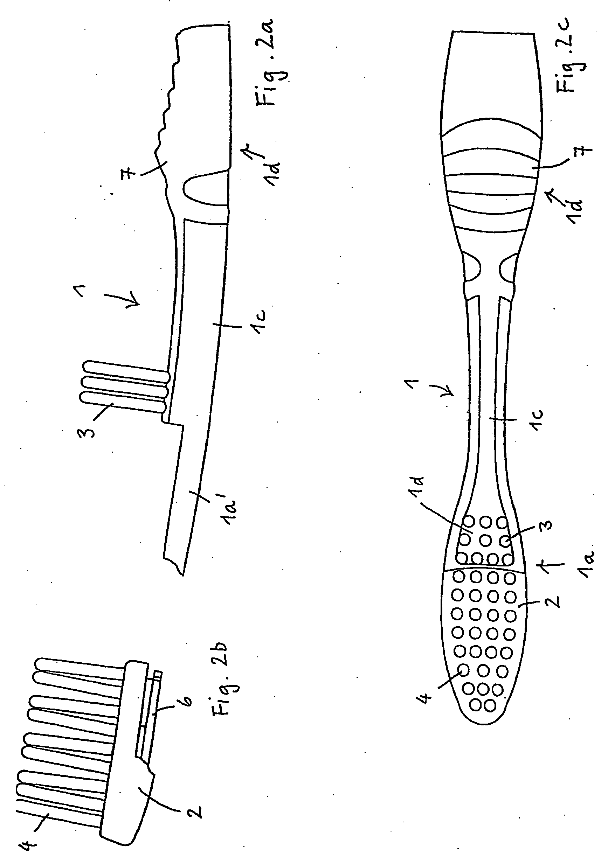

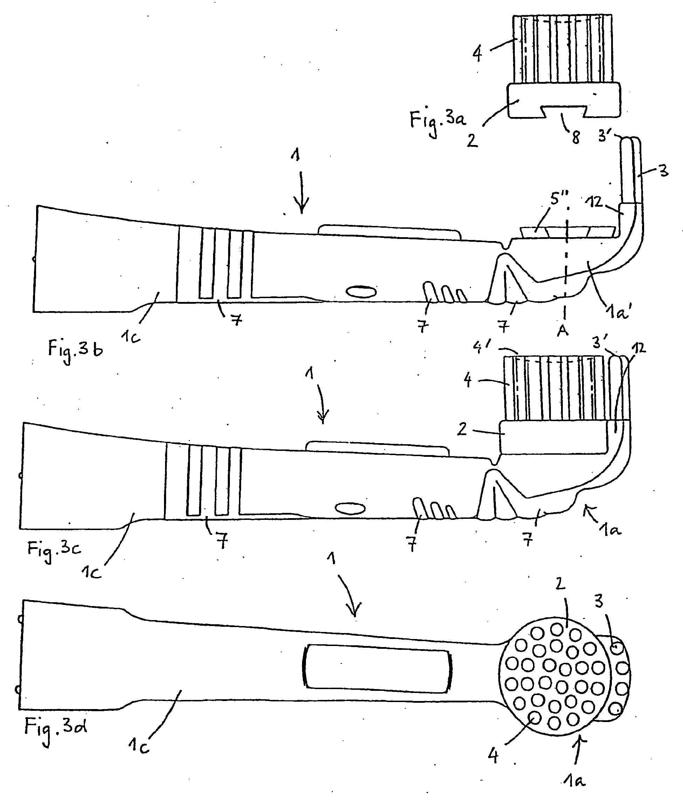

Alle dargestellten Zahnbürsten umfassen im zusammengesetzten Zustand einen Bürstenkörper 1 und ein mit konventionellen Borsten 4 bestücktes Trägerelement 2. Bei den dargestellten Handzahnbürsten (Fig. 1,2,8-13) umfasst der Bürstenkörper 1 einen Kopfteil la', einen Halsteil 1c und einen daran anschliessenden Handgriff 1d, wie er beispielsweise in Fig. 2a und 2c angedeutet ist. Bei den für elektrische Zahnreinigungsgeräte dargestellten Aufsteckteilen (Fig. 3-7), welche an einen Handgriff aufsteckbar sind, umfasst der Bürstenkörper 1 einen Kopfteil la' und einen Halsteil 1c. Einstückige Elektrozahnbürsten umfassen zusätzlich einen am Halsteil anschliessenden Handgriff. Des weiteren sind konventionelle Borsten 4 und mindestens ein weichelastisches Reinigungselement 3, das unterschiedliche Form haben kann, am Kopfteil 1a der fertig zusammengesetzten Zahnbürste vorhanden. Die konventionellen Borsten 4 sind in Borstenbündeln an einem aus hartem Kunststoff bestehenden Trägerelement 2 angebracht, welches über eine Aufnahme 5 mit dem Bürstenkörper 1 verbunden ist. Im Folgenden wird nur auf die Besonderheiten der einzelnen Ausführungsbeispiele eingegangen. Dabei sind einander entsprechende Elemente mit gleichen Bezugszeichen bezeichnet.

Fig. 1a zeigt einen vorderen Teil eines Bürstenkörpers 1, welcher der besseren Übersichtlichkeit halber ohne ein weichelastisches Reinigungselement dargestellt ist, vor dem Zusammenbau mit einem bereits mit Borsten 4 bestückten Trägerelement 2. Das in Fig. 1b abgebildete Trägerelement 2 ist mit konventionellen Borsten 4 bestückt, welche fertig bearbeitet sind. Für das Beborsten wird bevorzugt das AFT (Anchor Free Tufting) Verfahren angewandt. Das Trägerelement 2 hat die Form einer Platte 2a mit einem über eine umlaufende Seitenwand 2b überstehenden Rand 2a' und ist an die Abmessungen eines vorbereiteten Bereichs in Form einer flachen Aussparung 5' im Kopfteil la' des Bürstenkörpers 1 angepasst. Bevorzugt wird das Trägerelement 2 mit dem Bürstenkörper 1 beispielsweise durch Kleben oder Ultraschallschweissen unlösbar verbunden. Fig. 1c,d zeigen eine Zahnbürste bestehend aus einem Bürstenkörper 1 mit weichelastischen Reinigungselementen 3a,3b und einem mit konventionellen Borsten 4 bestückten Trägerelement 2, wobei die weichelastische Reinigungselemente 3a,3b in Form von Lamellen unmittelbar mit dem Kopfteil 1a des Bürstenkörpers 1 gemäss Fig. 1a verbunden sind. Diese lamellenartigen Reinigungselemente 3a,3b sind in den seitlichen Randbereichen 1b um die Aussparung 5' angeordnet. Äussere Reinigungselemente 3a sind im wesentlichen parallel zur äusseren Kontur des Kopfteils 1a angeordnet und setzen sich in einem seitlich am Halsteil 1c hin zum Handgriff verlaufenden weichelastischen Belag 7a fort. Ein inneres Reinigungselement 3b ist im wesentlichen parallel zur Seitenwand 2b des Trägerelementes 2 ausgerichtet. Die Reinigungselemente 3a,3b stehen parallel zur Richtung der Borsten 4 vom Kopfteil 1a ab. Um einen möglichst geringen Abstand von weniger als 5 mm zwischen konventionellen Borsten und Reinigungselementen zu gewährleisten, kann es notwendig sein, die weichelastischen Reinigungselemente 3 vor dem Einsetzen des beborsteten Trägerelementes 2 in den Kopfteil 1a des Bürstenkörpers 1 zu verdrängen.

Fig. 2a zeigt den vorderen Teil eines Bürstenkörpers 1 einer Wechselkopfzahnbürste. Die weichelastischen Reinigungselemente 3 sind dabei auf der dem Halsteil 1c zugewandten Seite des Kopfteils la' des Bürstenkörpers 1 angeordnet. Das entsprechende bereits mit Borsten 4 bestückte Trägerelement 2, welches den Wechselkopf darstellt, ist in Fig. 2b abgebildet. Das Trägerelement 2 lässt sich mittels einer Führungsleiste 6 in eine Längsführung (nicht sichtbar) am vorderen Teil des Bürstenkörpers 1 einschieben, welche in Längsrichtung des Bürstenkörpers 1 verläuft. In der in Fig. 2c gezeigten Endstellung wird das Trägerelement 2 mittels einer lösbaren Schnappverbindung (nicht sichtbar) gegen eine Verschiebung in Längsrichtung fixiert, wie beispielsweise in der WO-A-98/01055 offenbart.

Die weichelastischen Reinigungselemente 3 sind stabförmig auf der dem Halsteil 1c zugewandten Seite des Kopfteils 1a des Bürstenkörpers 1 angeordnet. Der Halsteil 1c und der Handgriff 1d sind zusätzlich durch eine weitere weichelastische Struktur 7 profiliert, welche bevorzugt im Zwei- oder Mehrkomponentenspritzgiessverfahren im selben Schritt wie die weichelastischen Reinigungselemente 3 hergestellt und mit der Hartkomponente des Bürstenkörpers 1 verbunden wird. Fig. 2c zeigt die aus Bürstenkörper 1 und Trägerelement 2 zusammengesetzte Wechselkopfzahnbürste in der Draufsicht. Im zusammengesetzten Zustand bildet das mit konventionellen Borsten 4 bestückte Trägerelement 2 die vordere Spitze der Zahnbürste.

Fig. 3a zeigt ein bereits mit Borsten 4 bestücktes Trägerelement 2 in Form einer kreisrunden Platte vor der Montage auf den in Fig. 3b abgebildeten Bürstenkörper 1 eines Aufsteckteiles für ein elektrisches Zahnreinigungsgerät. Stabförmige weichelastische Reinigungselemente 3 sind im Bereich des freien Endes des Kopfteiles 1a unmittelbar mit dem Bürstenkörper 1 verbunden, wie aus Fig. 3b ersichtlich ist. Das Trägerelement 2 wird mit dem daran angepassten Kopfteil la' des Bürstenkörpers 1 bzw. einem darauf um die Achse A drehbar befestigten Drehteller 5" über eine Schnappverbindung in allgemein bekannter Weise zum in Fig. 3c und 3d gezeigten Aufsteckteil verbunden. Das Trägerelement 2 weist dazu an der von den Borsten 4 abgewandten Seite eine Nut 8 auf, in welcher das Gegenelement am Drehteller 5" eingreift und welche zur Drehmitnahme dient. Die weichelastischen Reinigungselemente 3 sind stabförmig ausgebildet und an einem am freien Ende des Kopfteiles 1a sich befindenden Fortsatz 12 des Bürstenkörpers 1 angeordnet, welcher sich in der fertig zusammengesetzten Zahnbürste auf der Höhe des Trägerelementes 2 befindet. Der Fortsatz 12 ist in der Draufsicht bogenförmig und an die Form des Trägerelementes 2 angepasst, so dass dieses frei drehen kann. Der Drehteller 5" und das daran befestigte Trägerelement 2 werden während des Gebrauchs über einen allgemein bekannten Antrieb (nicht sichtbar) hin und her bewegt. Im fertig montierten Zustand sind die Borsten 4 und die Reinigungselemente 3 parallel zueinander ausgerichtet. Die freien Enden 3' der Reinigungselemente 3 sind dabei im wesentlichen bündig mit dem freien Ende 4' der Borsten 4. Des weiteren sind weitere weichelastische Strukturen 7 am Halsteil 1c sowie im Bereich zwischen Halsteil 1c und Kopfteil 1a ausgebildet, wie Fig. 3b,c zeigen.

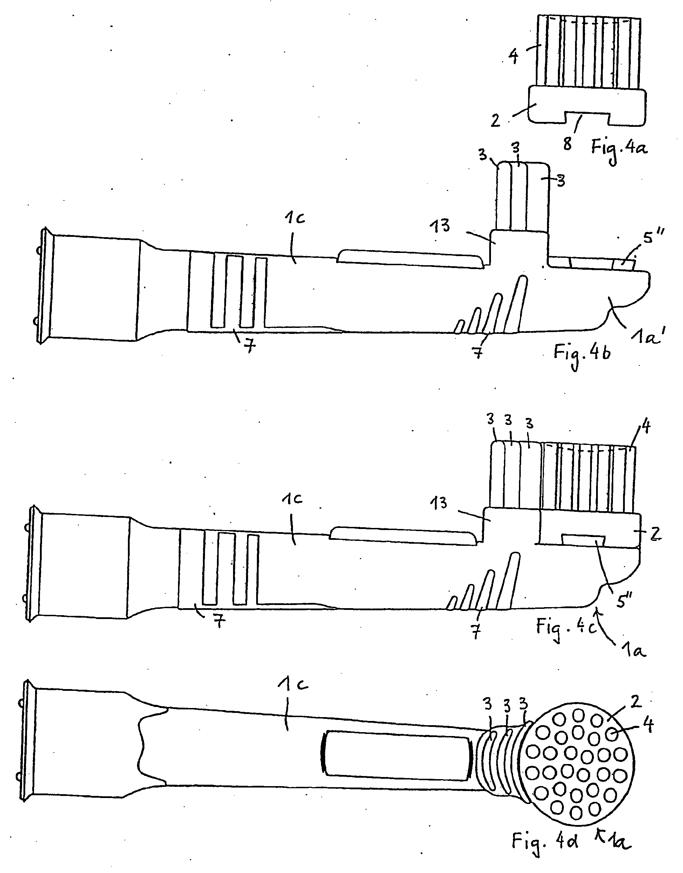

Fig. 4a zeigt ein zu 3a analoges mit Borsten 4 bestücktes Trägerelement 2. Die Verbindung zwischen dem Trägerelement 2 und dem Drehteller 5" des in Fig. 4b dargestellten Aufsteckteils wird in analoger Weise bewerkstelligt, wie dies für die Fig. 3a,b beschrieben wurde. Wie aus den Fig. 4c,d ersichtlich ist, sind bei dieser weiteren Ausführungsform eines Aufsteckteiles drei lamellenartige weichelastische Reinigungselemente 3, welche in der Draufsicht zum kreisrunden Trägerelement koaxial gebogen sind, hintereinander angeordnet und auf der dem Halsteil 1c zugewandten Seite des Kopfteiles 1a auf einem Fortsatz 13 angebracht. Des weiteren sind weitere weichelastische Strukturen 7 am Halsteil 1b sowie im Bereich zwischen Halsteil 1c und Kopfteil 1a ausgebildet, wie Fig. 4b,c zeigen. Vorzugsweise werden die weicheleastischen Reinigungselemente 3 in dieser Ausführungsform über nicht sichtbare Materialkanäle im Inneren des Aufsteckteils gespeist, die auch zur Herstellung von anderen weichelastischen Strukturen genutzt werden können.

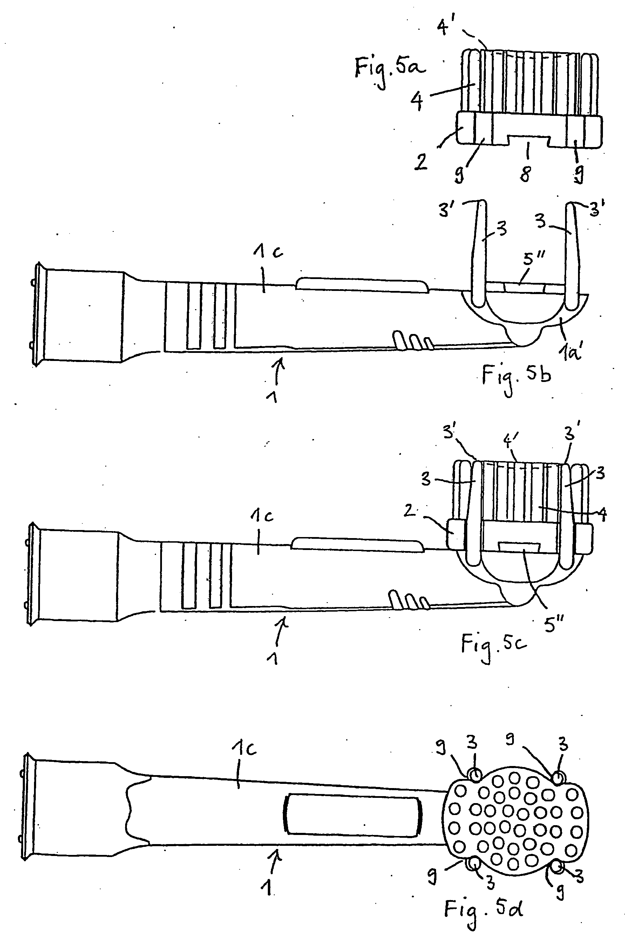

Fig. 5a zeigt ein im wesentlichen elliptisches beborstetes Trägerelement 2 mit vier seitlichen Einbuchtungen 9 in der Seitenansicht. Die Verbindung zwischen Trägerelement 2 und dem in Fig. 5b dargestellten Drehteller 5" des Bürstenkörpers 1 wird über eine allgemein bekannte Schnappverbindung bewerkstelligt. Vier stabförmige weichelastische Reinigungselemente 3 sind am Kopfteil la' des in Fig. 5b dargestellten Bürstenkörpers 1 um den Drehteller 5" angeordnet. Fig. 5c,d zeigen das fertig montierte Aufsteckteil für ein elektrisches Zahnreinigungsgerät in Seitenansicht und Draufsicht. Die vier leicht nach innen gebogenen und sich zu den freien Enden 3' hin verjüngenden stabförmigen Reinigungselemente 3 sind am Kopfteil 1a des Bürstenkörpers 1 seitlich derart angeordnet, dass sie nach erfolgter Montage des Trägerelementes 2 im Bereich von je einer der vier Einbuchtungen 9 angeordnet sind, wie aus Fig. Sc,d ersichtlich ist. Während des Gebrauchs wird der Drehteller 5" durch einen nicht sichtbaren Antrieb in eine alternierende Drehbewegung versetzt, welche auf das Trägerelement 2 übertragen wird. Dieses versetzt die weichelastischen Reinigungselemente 3, welche im Bereich der Einbuchtungen 9 seitlich am Kopfteil 1a angeordnet sind, durch Anschlagen in Vibration.

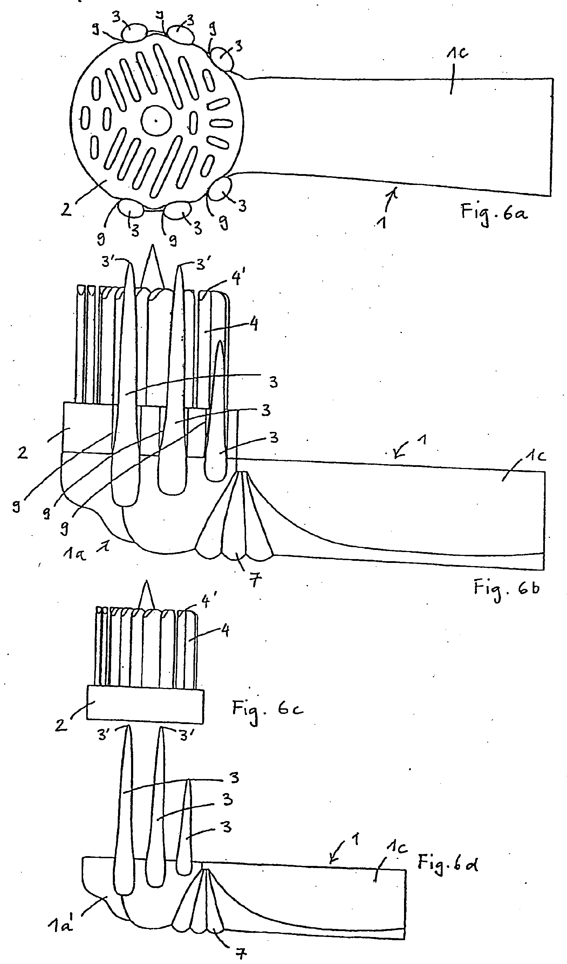

Bei dem in Fig. 6a,b dargestellten Teil eines Aufsteckteiles für ein elektrisches Zahnreinigungsgerät ist ein im wesentlichen kreisrundes Trägerelement 2 mit seitlichen Einbuchtungen 9 mit dem Bürstenkörper 1 verbunden. Die Trägerplatte ist in dieser Ausführungsform mit Borstenbündeln verschiedener Formen und Grössen bestückt. Mehrere rechteckige und gegen das Drehzentrum gerichtete Bündel übernehmen die Zahnoberflächenreinigung. Ein in der Mitte angeordnetes, die anderen Bündel überragendes, sich gegen oben verjüngendes Bündel übernimmt die Interdentalreinigung. Die sich zu den freien Enden 3' hin verjüngenden Reinigungselemente 3 sind seitlich am Kopfteil 1a des Bürstenkörpers 1 derart angeordnet, dass sie nach erfolgter Montage des in Fig. 6c dargestellten, bereits mit Borsten 4 bestückten Trägerelementes 2 auf den in Fig. 6d dargestellten Bürstenkörper 1 in den Bereichen der Einbuchtungen 9 angeordnet sind. Analog zu der in Fig. 5c,d dargestellten Ausführungsform wird das Trägerelement 2 durch einen nicht sichtbaren Antrieb in hin- und herdrehende Bewegung gebracht, wobei die sechs weichelastischen Reinigungselemente 3, welche im Bereich von je einer der sechs Einbuchtungen 9 seitlich am Kopfteil 1a angeordnet sind, in Vibration versetzt werden. Die freien Enden 3' der weichelastischen Reinigungselemente 3 überragen im montierten Zustand die freien Enden 4' der konventionellen Borsten 4. Im Bereich zwischen Halsteil 1c und Kopfteil 1a ist eine weitere weichelastische Struktur 7 zur Erhöhung der Elastizität in diesem Bereich ausgebildet.

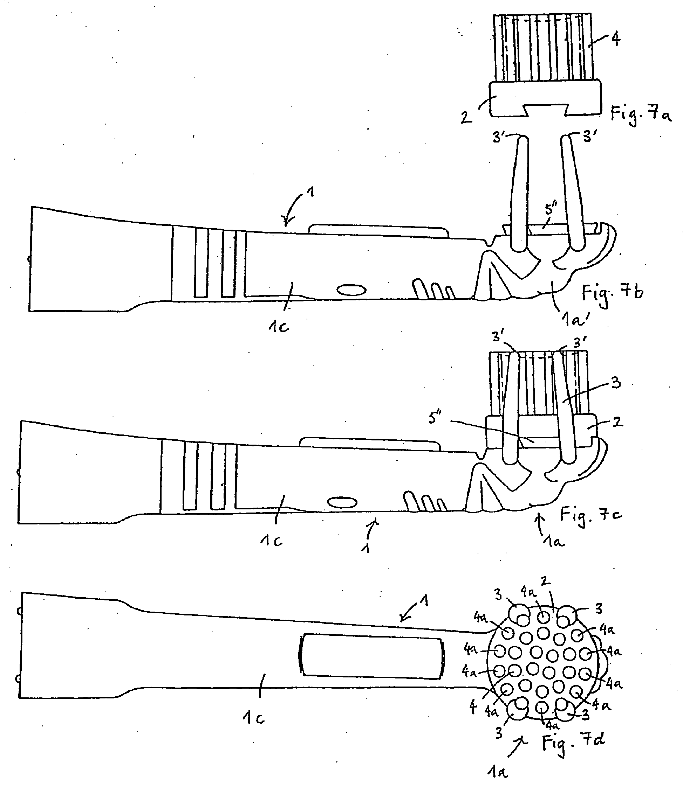

Fig. 7a zeigt ein im wesentlichen kreisrundes konventionell beborstetes Trägerelement 2. Die Verbindung zwischen Trägerelement 2 und dem in Fig. 7b dargestellten Drehteller 5" des Bürstenkörpers 1 wird über eine allgemein bekannte Schnappverbindung bewerkstelligt. In Fig. 7c,d ist das Aufsteckteil nach erfolgter Montage der in Fig. 7a,b dargestellten Komponenten in Seitenansicht und Draufsicht abgebildet. Die Reinigungselemente 3 verjüngen sich zum freien Ende 3' hin und sind leicht nach innen gebogenen. Sie sind derart mit dem Kopfteil 1a des Bürstenkörpers 1 verbunden, dass sie nach erfolgter Montage des in Fig. 7a dargestellten, bereits mit Borsten 4 bestückten Trägerelementes 2 in das von den Borsten 4 gebildete Borstenfeld hineinragen. Im Betrieb überträgt sich die Bewegung des Trägerelementes 2 über die peripheren Borsten 4a auf die Reinigungselemente 3.

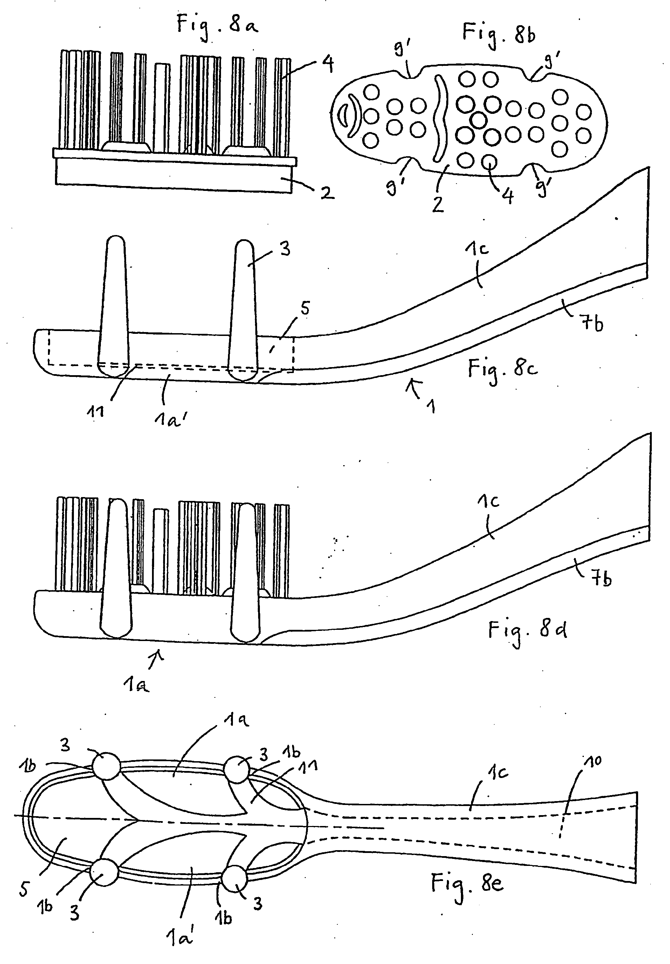

In Fig. 8a,b ist ein mit Borsten 4 bestücktes Trägerelement 2 in Seitenansicht und Draufsicht wiedergegeben. Das Trägerelemente dieser Ausführungsform weist Borstenbündel mit verschiedener Form und Grösse auf. Die runden Bündel dienen der Flächenreinigung und die länglichen Bündel der Interdentalreinigung. Wie aus der Draufsicht ersichtlich ist, weist das ovale Trägerelement 2 seitliche Einbuchtungen 9' für weichelastische Reinigungselemente auf. Fig. 8c zeigt den vorderen Teil eines fertigen Bürstenkörpers vor der Montage des in Fig. 8a,b gezeigten Trägerelements, während in Fig. 8d der vordere Teil einer fertig montierten Handzahnbürste wiedergegeben ist. Bevorzugt wird der Bürstenkörper 1 mit weichelastischen Reinigungselementen 3 durch ein Zwei- oder Mehrkomponentenspritzgiessverfahren hergestellt. Dabei wird über einen in Fig. 8e angedeuteten Materialverteilungskanal 10, welcher entlang des Halsteiles 1c verläuft, weichelastisches Material zugeführt. Das weichelastische Material 11 wird in der Aufnahme 5 an die für die Reinigungselemente 3 vorgesehenen Stellen geleitet und in entsprechenden Kavitäten geformt. Die vorgesehenen Stellen sind im Randbereich 1b um die Aufnahme 5 angeordnet. Wie aus Fig. 8e ersichtlich ist, ragen die Reinigungselemente 3 in der Draufsicht über die von der Hartkomponente gebildeten Fläche des Kopfteils la' des Bürstenkörpers hinaus. Fig. 8c,e zeigen den Bürstenkörper 1 nach vollendetem Spritzgiessverfahren. Die in Fig. 8c wiedergegebene Seitenansicht zeigt einen in den Materialverteilungskanal 10 eingebrachten weichelastischen Belag 7b am Halsteil 1c des Bürstenkörpers 1. Das in Fig. 8e gezeigte offenliegende weichelastische Material 11 im Kopfteil la' des Bürstenkörpers beziehungsweise am Boden der Aufnahme 5 wird durch das in Fig. 8a,b dargestellte, bereits mit Borsten 4 bestückte Trägerelement 2 nach dessen Montage auf das Kopfteil 1a' des Bürstenkörpers 1 verdeckt.

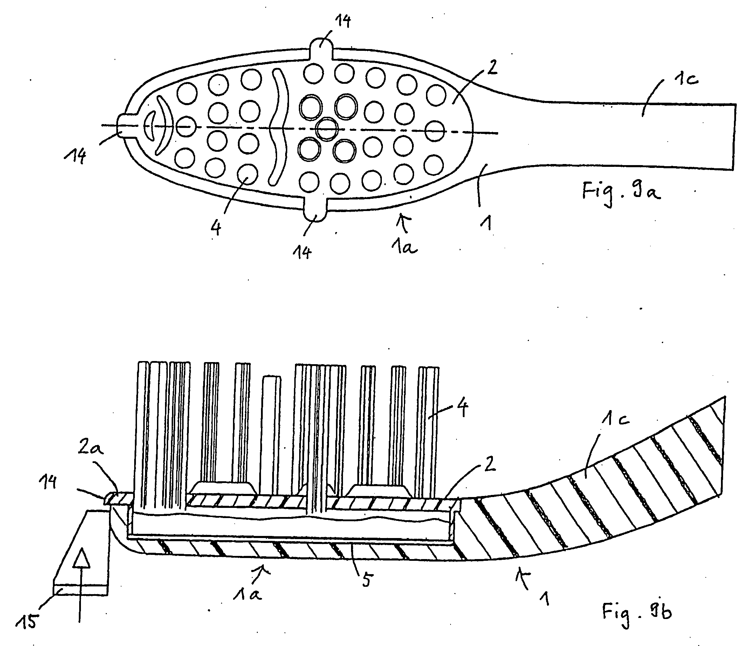

Fig. 9a zeigt den vorderen Teil einer aus Bürstenkörper 1 und Trägerelement 2 zusammengesetzten Zahnbürste, wobei aus Gründen der besseren Übersichtlichkeit die weichelastischen Reinigungselemente nicht gezeigt sind. Das weichelastische Material am Boden der Aufnahme 5 wird durch einen Durchbruch (nicht gezeigt) am Ende des Halsteils 1c, welcher in die Aufnahme 5 mündet, gespeist. Zu diesem Zweck wird vorgängig in der Hartkomponente des Bürstenkörpers 1 an entsprechender Stelle ein Durchbruch erstellt. Die Zahnbürste wird erfindungsgemäss einer bei der Montagevorrichtung installierten Prüfvorrichtung ausgesetzt, wie in Fig. 9b angedeutet ist. Dabei wird auf über den Kopfteil 1a hinausragende Zungen 14 mittels Stiften 15 eine bestimmte Druckkraft ausgeübt. Die Zungen 14 stellen seitliche Fortsätze der Platte 2a des Trägerelementes 2 dar. Die Druckkraft wird auf alle drei Zungen 14 gleichzeitig ausgeübt, wobei dies aus Gründen der Anschaulichkeit nur für die Zunge am vorderen Ende der Zahnbürste wiedergegeben ist. Da eine unlösbare Verbindung zwischen dem mit Borsten 4 bestückten Trägerelement 2 und dem Bürstenkörper 1 angestrebt ist, gilt die Montage dann als erfolgreich, wenn das Trägerelement 2 nicht aus der Aufnahme 5 des Bürstenkörpers 1 springt. Die Zungen 14 sind seitlich und an der Spitze des Kopfteiles 1a angeordnet, wie aus Fig. 9a ersichtlich ist. Es ist auch möglich, dass das Trägerelement die Aufnahme in einer anderen Form und an einer anderen Stelle überragt, um eine entsprechende Prüfung während des Herstellungsverfahrens oder eine entsprechende durch den Konsumenten von Hand ausgeführte Prüfung zu ermöglichen. Vorteilhafterweise wird die Prüfung während des Herstellungsverfahrens unmittelbar nach der Montage der Trägerplatte ausgeführt und automatisch mit der Montage verknüpft.

Weitere Möglichkeiten für die erfindungsgemässe Prüfung der Befestigung des Trägerelementes 2 in der Aufnahme 5 sind in den folgenden Figuren dargestellt:

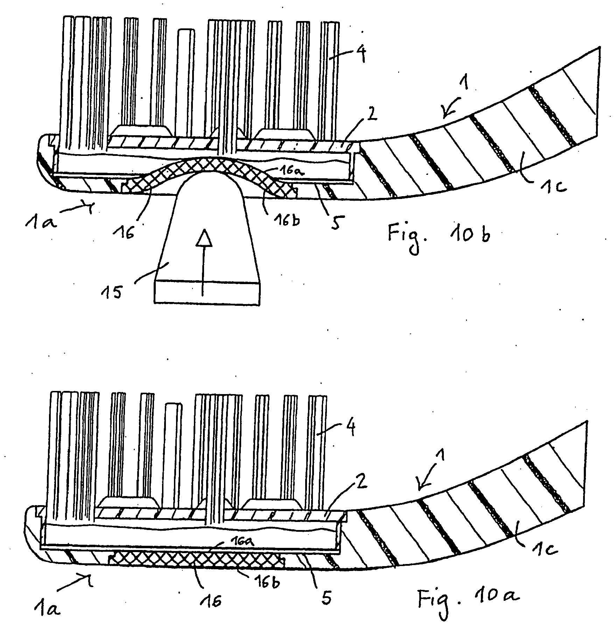

Fig. 10a zeigt den vorderen Teil einer weiteren Zahnbürste, bei welcher aus Gründen der Übersichtlichkeit die weichelastischen Reinigungselemente nicht gezeigt sind. Wie aus Fig. 10a ersichtlich ist, besteht ein Teil des Kopfteils 1a des Bürstenkörpers 1 im Bereich der Aufnahme 5 aus weichelastischem Material, welches eine weichelastische Zone 16 bildet. Die weichelastische Zone 16 ist im Schnitt gestuft ausgebildet, so dass die Fläche der Zone 16 auf der dem Trägerelement 2 zugewandten Seite 16a kleiner ist, als die Zonenfläche auf der dem Trägerelement abgewandten Seite 16b. In der Prüfvorrichtung wird mittels eines Stiftes 15 unmittelbar auf die weichelastische Zone 16 und mittelbar auf das Trägerelement 2 eine bestimmte Druckkraft ausgeübt, wie Fig. 10b zeigt. Die Druckkraft ist im wesentlichen orthogonal zur Längsachse des Kopfteils 1a ausgerichtet.

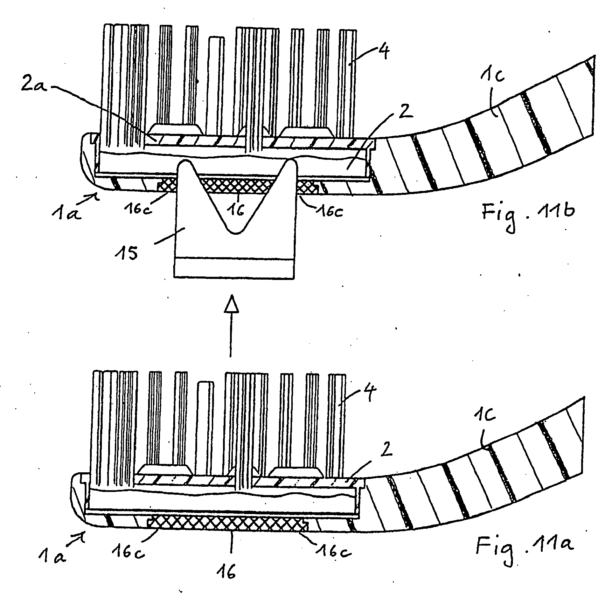

Fig. 11a zeigt den vorderen Teil einer zu der in Fig. 10a analogen Zahnbürste, wobei aus Gründen der besseren Übersichtlichkeit die weichelastischen Reinigungselemente nicht gezeigt sind. Wie aus Fig. 11b ersichtlich ist, wird die weichelastische Zone 16 an den Randbereichen 16c mittels eines zweigezähnten messerartigen Elementes durchschnitten. Dadurch wird die im wesentlichen orthogonal zur Längsachse gerichtete Druckkraft unmittelbar auf die Platte 2a des Trägerelementes ausgeübt. Zur Ausübung der Prüfung können auch andere Elemente, wie beispielsweise ein nadelartiges Testwerkzeug, verwendet werden. Diese sind derart ausgebildet, dass sie die Haftung der Trägerplatte prüfen, dabei aber das weichelastische Material möglichst wenig verletzen.

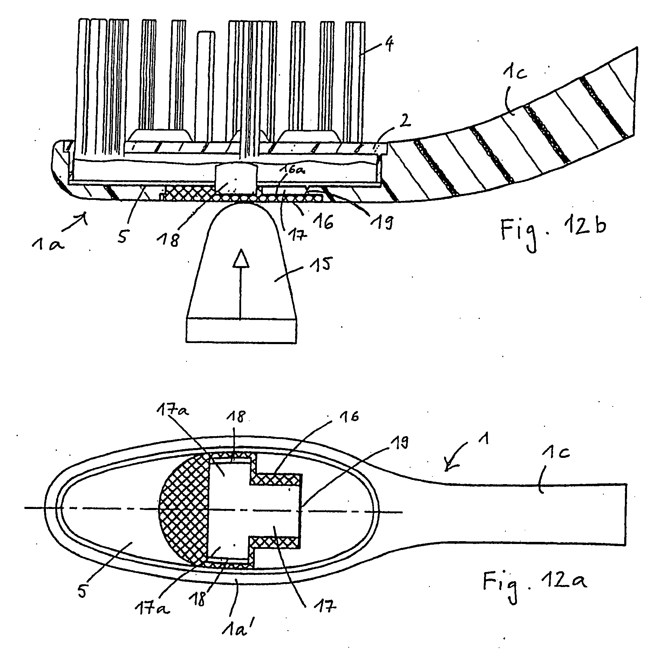

In Fig. 12a ist ein vorderer Teil des Bürstenkörpers 1 einer Zahnbürste dargestellt, wobei aus Gründen der Anschaulichkeit die weichelastischen Reinigungselemente nicht gezeigt sind. Dabei besteht ein Teil des Kopfteils 1a' des Bürstenkörpers 1 im Bereich der Aufnahme 5 aus weichelastischem Material, welches eine weichelastische Zone 16 bildet. Diese ist in der Draufsicht pilzförmige ausgestaltet. Die Hartkomponente des Bürstenkörpers 1 erstreckt sich auf der dem Trägerelement 2 zugewandten Seite 16a der weichelastischen Zone 16 in eine in der Draufsicht t-förmige flächige Struktur 17. Die t-förmige Struktur 17 ist mit dem restlichen Teil der Hartkomponente des Bürstenkörpers über ein Filmscharnier 19 verbunden. An den Enden der kürzeren Arme 17a der t-förmigen Struktur 17 sind stegartige Fortsätze 18 ausgebildet, die im wesentliche parallel zur äusseren Kontur des Kopfteiles 1a bzw. zur Seitenwand 2b des Trägerelementes 2 und orthogonal zur Fläche der Aufnahme 5 ausgerichtet sind. Die Druckkraft wird von Aussen auf die weichelastische Zone 16 im Bereich der t-förmigen Struktur 17 ausgeübt und verläuft im wesentlichen orthogonal zur Längsachse des Kopfteiles 1a, wie aus Fig. 12b ersichtlich ist. Dadurch wird die Druckkraft über die flächigen Fortsätze 18 auf die Platte 2a des Trägerelementes 2 übertragen.

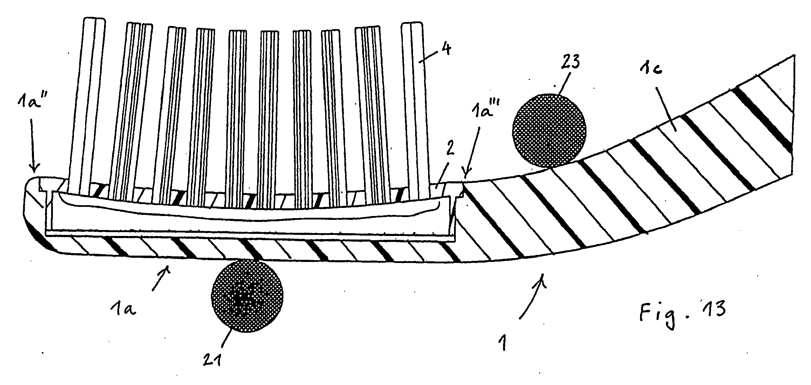

Fig. 13 zeigt den vorderen Teil einer Ausführungsform, in der die Haftung des Trägerelementes am Bürstenkörper durch Biegen des Bürstenkopfes überprüft wird. Dazu wird der Bürstenkörper zwischen zwei Auflagen 21, 23 eingespannt, wobei die Rückseite des Kopfteiles 1a an der ersten Auflage 21 und die Vorderseite jenes Bereichs des Halsteiles 1c, der an den Kopfteil 1a angrenzt, an einer zweiten Auflage 23 liegt. Am vorderen Ende 1a" des Kopfteiles 1a wird auf die Vorderseite eine vorgegebene Druckkraft beaufschlagt, indem beispielsweise ein Testgewicht von bevorzugt 0.5 bis 5 kg, besonders bevorzugt von 2 bis 3 kg, aufgelegt wird. Dadurch wird der Kopfteil 1a gebogen, wobei auf die Verbindungsstelle zwischen Trägerelement 2 und Bürstenkörper 1 eine Zugkraft wirkt. Löst sich das mit Borsten 4 bestückte Trägerelement 2 mindestens teilweise vom Kopfteil 1a des Bürstenkörpers 1, so liegt eine ungenügende Haftung vor. Die dabei auftretende relative Verschiebung des Trägerelementes 2 in Bezug zum Bürstenkörper 1 wird mittels eines beispielsweise mechanischen oder optischen Sensors bevorzugt in dem am Halsteil 1c angrenzenden Bereich 1a"' des Kopfteiles 1a bestimmt, in dem das Trägerelement 2 mit dem Bürstenkörper 1 verbunden ist.

Die oben beschriebenen Prüfmethoden können als Prozessschritt in eine AFT (Anchor Free Tufting)-Anlage integriert werden. Dabei werden Zahnbürsten ausgeschieden, die über eine ungenügende Haftung zwischen Bürstenkörper und Trägerelement verfügen.

## Patentansprüche

1. Verfahren zur Herstellung einer Zahnbürste mit einem einen Halsteil (1c) und einen daran anschliessenden Kopfteil (1a) aufweisenden Bürstenkörper (1) und einem separat hergestellten Trägerelement (2) auf dem konventionelle Borsten (4) angebracht sind, welches über eine an das Trägerelement (2) angepasste Aufnahme (5) am Kopfteil (1a) mit dem Bürstenkörper (1) verbunden ist, **dadurch gekennzeichnet, dass** die folgenden Schritte umfasst sind:
a) Beborsten des Trägerelements (2) mit konventionellen Borsten (4);
b) unlösbares Verbinden des Trägerelements (2) mit der Aufnahme (5) des Bürstenkörpers (1);
c) anschliessende Ausübung einer Druckkraft auf das Trägerelement (2) und/oder den Bürstenkörper (1), um die Haftung zwischen dem Trägerelement (2) und der Aufnahme (5) des Bürstenkörpers (1) zu überprüfen.

2. Verfahren nach Anspruch 1, **dadurch gekennzeichnet, dass** während der Ausübung der Druckkraft auf das Trägerelement (2) und/oder den Bürstenkörper (1) gemessen wird, ob sich das Trägerelement (2) relativ zum Bürstenkörper (1) verschiebt.

3. Verfahren nach Anspruch 1 oder 2, **dadurch gekennzeichnet, dass** das Trägerelement (2) Zungen (14) aufweist, welche über den Kopfteil (1a) hinausragen und dass die Druckkraft auf diese Zungen ausgeübt wird.

4. Verfahren nach Anspruch 1 oder 2, **dadurch gekennzeichnet, dass** ein Teil des Kopfteils (1a) des Bürstenkörpers (1) im Bereich der Aufnahme (5) aus weichelastischem Material besteht, welches eine weichelastische Zone (16) bildet, und dass die Druckkraft unmittelbar auf die weichelastische Zone (16) und mittelbar auf das Trägerelement (2) ausübt wird.

5. Verfahren nach Anspruch 1 oder 2, **dadurch gekennzeichnet, dass** ein Teil des Kopfteils (1a) des Bürstenkörpers (1) im Bereich der Aufnahme (5) aus weichelastischem Material besteht, welches eine weichelastische Zone (16) bildet, und dass die weichelastische Zone (16) mittels eines messer- oder nadelartigen Testwerkzeuges durchschnitten wird, um die Druckkraft unmittelbar auf eine Platte (2a) des Trägerelements (2) auszuüben.

6. Verfahren nach Anspruch 1 oder 2, **dadurch gekennzeichnet, dass** ein Teil des Kopfteils (1a) des Bürstenkörpers (1) im Bereich der Aufnahme (5) aus weichelastischem Material besteht, welches eine weichelastische Zone (16) bildet, in welche sich eine zusätzliche Struktur (17) aus einer Hartkomponente erstreckt, welche über ein Filmscharnier (19) mit dem restlichen Teil der Hartkomponente des Bürstenkörpers (1) verbunden ist und dass die Druckkraft auf die weichelastische Zone (16) im Bereich der zusätzlichen Struktur (17) ausgeübt wird, welche die Druckkraft auf eine Platte (2a) des Trägerelements (2) überträgt.

7. Verfahren nach Anspruch 1 oder 2, **dadurch gekennzeichnet, dass** die Haftung des Trägerelementes (2) am Bürstenkörper (1) durch Biegen des Kopfteils (1a') überprüft wird.

8. Verfahren nach Anspruch 7, **dadurch gekennzeichnet, dass** der Bürstenkörper (1) zwischen zwei Auflagen (21, 23) eingespannt wird und die Druckkraft am vorderen Ende (1a") des Kopfteils (1a') beaufschlagt wird, um das Kopfteil (1a) zu biegen, wobei eine Zugkraft zwischen Trägerelement (2) und Bürstenkörper (1) wirkt.

9. Verfahren nach Anspruch 8, **dadurch gekennzeichnet, dass** zur Beaufschlagung mit Druckkraft ein Testgewicht von 0,5 - 5 kg aufgelegt wird.

10. Verfahren nach einem der Ansprüche 1 bis 6, **dadurch gekennzeichnet, dass** die Druckkraft im Wesentlichen orthogonal zur Längsachse des Kopfteils (1a) ausgerichtet wird.

11. Verfahren nach einem der Ansprüche 7 bis 9 **dadurch gekennzeichnet, dass** die relative Verschiebung des Trägerelementes (2) in Bezug zum Bürstenkörper (1) mittels eines Sensors bestimmt wird, um festzustellen, ob eine ungenügende Haftung zwischen dem Trägerelement (2) und dem Bürstenkörper (1) besteht.

12. Verfahren nach einem der Ansprüche 1 bis 11, **dadurch gekennzeichnet, dass** Zahnbürsten mit einer ungenügenden Haftung zwischen Trägerelement (2) und Bürstenkörper (1) ausgeschieden werden.

13. Verfahren nach einem der Ansprüche 1 bis 12, **dadurch gekennzeichnet, dass** die Prüfung der Befestigung des Trägerelements (2) in der Aufnahme (5) während des Herstellungsverfahrens nach der Montage des Trägerelementes (2) und automatisch mit der Montage verknüpft wird.

14. Verfahren nach einem der Ansprüche 1 bis 13, **dadurch gekennzeichnet, dass** die Prüfung der Befestigung des Trägerelements (2) in der Aufnahme (5) als Prozessschritt in einer Anchor Free Tufting (AFT) Anlage integriert ist.

## Claims

1. Method of producing a toothbrush with a brush body (1) having a neck part (1c) and a head part (1a) adjoining the same, and with a carrier element (2) produced separately on which conventional bristles (4) are fitted, which is connected to the brush body (1) via a mount (5) which is adapted to the carrier element (2) and is located on the head part (1a), **characterized in that** the following steps are comprised:
a) providing the carrier element (2) with conventional bristles (4);
b) connecting in a non-releasable manner the carrier element (2) to the mount (5) of the brush body (1);
c) subsequently applying a pressing force to the carrier element (2) and/or to the brush body (1), in order to check the adherence between the carrier element (2) and the mount (5) of the brush body (1).

2. Method as claimed in claim 1, **characterized in that**, during the application of the pressing force to the carrier element (2) and/or to the brush body (1), measurements are being taken as to whether the carrier element (2) is displaced relative to the brush body (1)

3. Method as claimed in claim 1 or 2, **characterized in that** the carrier element (2) has tongues (14), which project beyond the head part (1a) and **in that** the pressing force is applied to these tongues.

4. Method as claimed in claim 1 or 2, **characterized in that** a part of the head part (1a) of the brush body (1), in the region of the mount (5), consists of soft-resilient material which forms a soft-resilient zone (16), and **in that** the pressing force is applied directly to the soft-resilient zone (16) and indirectly to the carrier element (2)

5. Method as claimed in claim 1 or 2, **characterized in that** a part of the head part (1a) of the brush body (1), in the region of the mount (5), consists of soft-resilient material which forms a soft-resilient zone (16), and **in that** the soft-resilient zone (16) is cut through by means of a blade-like or a needle-like testing tool in order to apply the pressing force directly to a plate (2a) of the carrier element (2).

6. Method as claimed in claim 1 or 2, **characterized in that** a part of the head part (1a) of the brush body (1), in the region of the mount (5), consists of soft-resilient material which forms a soft-resilient zone (16), in which a further structure (17) made of a hard component extends, which is connected to the rest of the hard component of the brush body (1) via a film hinge (19) and **in that** the pressing force is applied to the soft-resilient zone (16) in the region of the further structure (17), which transmits the pressing force to a plate (2a) of the carrier element (2).

7. Method as claimed in claim 1 or 2, **characterized in that** the adherence of the carrier element (2) to the brush body (1) is checked by virtue of the brush head (1a') being bent.

8. Method as claimed in claim 7, **characterized in that** the brush body (1) is clamped in between two supports (21, 23) and the pressing force is applied to the front end (1a") of the head part (1a') in order to bend the head part (1a), wherein a tensile force acts between the carrier element (2) and the brush body (1).

9. Method as claimed in claim 8, **characterized in that** a test weight of 0.5 - 5 kg is placed to apply a pressing force.

10. Method as claimed in any one of claims 1 to 6, **characterized in that** the pressing force is oriented substantially orthogonally to the longitudinal axis of the head part (1a).

11. Method as claimed in any one of claims 7 to 9, **characterized in that** the relative displacement of the carrier element (2) relative to the brush body (1) is determined by means of a sensor, in order to establish if there is an insufficient adherence between the carrier element (2) and the brush body (1).

12. Method as claimed in any one of claims 1 to 11, **characterized in that** toothbrushes with an insufficient adherence between the carrier element (2) and the brush body (1) are separated out.

13. Method as claimed in any one of claims 1 to 12, **characterized in that** testing of the fixing of the carrier element (2) in the mount (5) is carried out during the production process after the carrier element (2) has been assembled and is automatically linked with assembly.

14. Method as claimed in any one of claims 1 to 13, **characterized in that** testing of the fixing of the carrier element (2) in the mount (5) is integrated as a process step in an Anchor Free Tufting (AFT) installation.

## Revendications

1. Procédé de fabrication d'une brosse à dents avec un corps de brosse (1) comprenant une partie de col (1c) et une partie de tête (1a) s'y raccordant, et avec un élément de support (2) fabriqué séparément sur lequel des soies conventionnelles (4) sont appliquées, qui est relié au corps de brosse (1) au moyen d'un logement (5) qui est ajusté à l'élément de support (2) et est situé sur la partie de tête (1a), **caractérisé en ce que** les étapes suivantes sont comprises:
a) garnir l'élément de support (2) avec des soies conventionnelles (4);
b) relier de façon non-détachable l'élément de support (2) au logement (5) du corps de brosse (1);
c) ensuite appliquer une force de pression à l'élément de support (2) et/ou au corps de brosse (1), pour contrôler l'adhérence entre l'élément de support (2) et le logement (5) du corps de brosse (1).

2. Procédé selon la revendication 1, **caractérisé en ce que**, pendant l'application de la force de pression à l'élément de support (2) et/ou au corps de brosse (1), on mesure si l'élément de support (2) se déplace par rapport au corps de brosse (1).

3. Procédé selon la revendication 1 ou 2, **caractérisé en ce que** l'élément de support (2) présente des languettes (14) qui dépassent de la partie de tête (1a) et **en ce que** la force de pression est appliquée à ces languettes.

4. Procédé selon la revendication 1 ou 2, **caractérisé en ce qu'**une partie de la partie de tête (1a) du corps de brosse (1), dans la région du logement (5), consiste en un matériau élastique mou qui forme une zone élastique molle (16), et **en ce que** la force de pression est appliquée directement à la zone élastique molle (16) et indirectement à l'élément de support (2)

5. Procédé selon la revendication 1 ou 2, **caractérisé en ce qu'**une partie de la partie de tête (1a) du corps de brosse (1), dans la région du logement (5), consiste en un matériau élastique mou qui forme une zone élastique molle (16), et **en ce que** la zone élastique molle (16) est tranchée au moyen d'un outil de test en forme de lame ou en forme d'aiguille pour appliquer la force de pression directement à une plaque (2a) de l'élément de support (2).

6. Procédé selon la revendication 1 ou 2, **caractérisé en ce qu'**une partie de la partie de tête (1a) du corps de brosse (1), dans la région du logement (5), consiste en un matériau élastique mou qui forme une zone élastique molle (16), dans laquelle une structure supplémentaire (17) faite d'un matériau dur s'étend, qui est reliée au reste du matériau dur du corps de brosse (1) au moyen d'une charnière à film (19), et **en ce que** la force de pression est appliquée à la zone élastique molle (16) dans la région de la structure supplémentaire (17), qui transmet la force de pression à une plaque (2a) de l'élément de support (2).

7. Procédé selon la revendication 1 ou 2, **caractérisé en ce que** l'adhérence de l'élément de support (2) au corps de brosse (1) est contrôlé par courbement de la tête de brosse (1a').

8. Procédé selon la revendication 7, **caractérisé en ce que** le corps de brosse (1) est serré entre deux supports (21, 23) et la force de pression est appliquée à l'extrémité frontale (1a") de la partie de tête (1a') pour courber la partie de tête (1a), une force de traction agissant entre l'élément de support (2) et le corps de brosse (1).

9. Procédé selon la revendication 8, **caractérisé en ce qu'**un poids test de 0.5 - 5 kg est positionné pour appliquer une force de pression.

10. Procédé selon l'une quelconque des revendications 1 à 6, **caractérisé en ce que** la force de pression est orientée essentiellement orthogonalement par rapport à l'axe longitudinal de la partie de tête (1a).

11. Procédé selon l'une quelconque des revendications 7 à 9, **caractérisé en ce que** le déplacement relatif de l'élément de support (2) par rapport au corps de brosse (1) est déterminé au moyen d'un senseur, pour établir s'il y a une adhérence insuffisante entre l'élément de support (2) et le corps de brosse (1).

12. Procédé selon l'une quelconque des revendications 1 à 11, **caractérisé en ce que** des brosses à dents avec une adhérence insuffisante entre l'élément de support (2) et le corps de brosse (1) sont exclues.

13. Procédé selon l'une quelconque des revendications 1 à 12, **caractérisé en ce que** le contrôle de la fixation de l'élément de support (2) dans le logement (5) est effectué pendant le processus de fabrication après l'assemblage de l'élément de support (2) et est connecté automatiquement avec l'assemblage.

14. Procédé selon l'une quelconque des revendications 1 à 13, **caractérisé en ce que** le contrôle de la fixation de l'élément de support (2) dans le logement (5) est intégré comme une étape du processus dans une installation de type Anchor Free Tufting (AFT).
